# EUROPÄISCHE PATENTSCHRIFT

(11) **EP 0 928 051 B1**
(45) Veröffentlichungstag und Bekanntmachung des Hinweises auf die Patenterteilung: **07.05.2003**
(21) Anmeldenummer: 98121354.9
(22) Anmeldetag: 10.11.1998
(51) Int. Cl.: H01R 39/38, H02K 5/14

(54) **Kohlehalteranordnung**
Carbon brush holder arrangement
Arrangement de porte-balai pour balai en charbon

(30) Priorität: 10.11.1997 DE 19749457
(43) Veröffentlichungstag der Anmeldung: 07.07.1999
(73) Patentinhaber: SCHUNK Motorensysteme GmbH, D-27777 Ganderkesee (DE)
(72) Erfinder: Pietsch, Rainer, D-28857 Syke (DE); Harms, Gerhard, Dipl.Ing., D-27801 Dötlingen (DE)
(74) Vertreter: Stoffregen, Hans-Herbert, Dr. Dipl.-Phys.

(56) Entgegenhaltungen:
- EP-A- 0 105 392
- US-A- 4 311 936
- US-A- 4 855 631
- US-A- 5 471 107

## Beschreibung

Die Erfindung bezieht sich auf eine Kohlehalteranordnung für Elektromotoren umfassend eine aus elektrisch isolierendem Material bestehende Trägerplatte mit von dieser ausgehendem köcherförmigen stirnseitig offenen Kohlehalter, dessen Umfangswandungen sowie Rückwandung aus dem Trägermaterial ausgebildet sind, wobei zum rückseitigen Verschließen des Kohlehalters die Rückwandung durch ein relativ zu den Umfangswandungen des Kohlehalters bewegbares Verschlusselement oder einen Abschnitt von diesem gebildet ist.

In der EP 0 291 765 A2 ist eine Kohlehalteranordnung vorgesehen, die aus einer Trägerplatte aus elektrisch isolierendem Material besteht, auf der in Form eines Stanzgitters eine Verschaltung verrastbar ist, die ihrerseits als integrale Bestandteile köcherförmige Kohlehalter aufweist. Hierdurch ergibt sich eine einfach montierbare Einheit, wobei zusätzlich die Möglichkeit geschaffen wird, dass eine einwandfreie elektrische Kontaktierung gegeben ist.

Der US 3,745,393 ist eine Kohlehalteranordnung der eingangs genannten Art zu entnehmen, bei der der Kohlehalter aus dem Trägerplattenmaterial besteht, jedoch insgesamt einstückig mit der Trägerplatte ausgebildet ist. Hierdurch ist ein Bestücken der Kohlehalter von der Stirnseite her erforderlich. Das erschwert eine kostengünstige Montage in kurzen Taktzeiten.

Aus der EP 0 655 169 B1 ist ein Bürstenhalter für Elektromotoren bekannt, bei dem der Kohlehalter umfangswandungsseitig aus dem aus elektrisch isolierenden Material bestehenden Trägerplattenmaterial ausgebildet und rückseitig von einem Verschlusslappen eines mit der Trägerplatte verbindbaren Stanzgitters verschließbar ist. Sofern auf der Trägerplatte im Bereich der Rückseite des Kohlehalters Stege verlaufen, behindern diese ein Falten der Verschlusslappen bzw. die Kohlenbürsten müssen entsprechend kürzer ausgebildet sein.

Kohlehalteranordnungen der eingangs genannten Art sind der US 4,855,631 und 4,311,936 zu entnehmen. Dabei sind die aus Kunststoff bestehenden Kohlehalter mit Kappen verschließbar, die ihrerseits aus Kunststoff bestehen. Da Kohlehalter und Kappe getrennte Elemente sind, sind sowohl herstellungstechnisch als auch montagemäßig erhebliche Nachteile gegeben.

Der vorliegenden Erfindung liegt das Problem zugrunde, eine Kohlehalteranordnung der eingangs genannten Art so weiterzubilden, dass mit konstruktiv einfachen Maßnahmen ein Kohlehalter zur Verfügung gestellt wird, der problemlos und gegebenenfalls vollautomatisch mit einer Kohlebürste und einer diese beaufschlagenden Feder bestückbar ist. Dabei soll sichergestellt sein, dass die Rückwand eine eindeutige Positionierung erfährt, so dass infolge dessen auf die Kohlebürste reproduzierbare Federkräfte einwirken. Auch soll die Möglichkeit gegeben sein, die Länge der Kohlehalter optimal auf die Dimensionierung der Trägerplatte auslegen zu können.

Das Problem wird erfindungsgemäß im wesentlichen dadurch gelöst, dass das Verschlusselement zusammen mit der Trägerplatte oder einer Umfangswandung des Kohlehalters als ein Spritzteil hergestellt ist.

Abweichend vom vorbekannten Stand der Technik wird eine Kohlehalteranordnung mit einem Kohlehalter vorgeschlagen, der vollständig aus dem Material der Trägerplatte gebildet ist, also mit dieser zusammen als Spritzteil zur Verfügung gestellt wird. Dabei sollte das Verschlusselement mit der Trägerplatte bzw. einer Umfangswandung des Kohlehalters über einen Filmanguss wie Filmscharnier verbunden sein das dann, wenn das Verschlusselement zum Verschließen des Kohlehalters eine translatorische Bewegung ausübt, durchtrennt wird. Hierzu ist der Filmanguss in einer Stärke derart ausgebildet, dass bei hinreichender Krafteinwirkung auf das Verschlusselement die Verbindung gebrochen wird.

Alternativ bestünde die Möglichkeit, das Verschlusselement als insbesondere aus der Ebene der Trägerplatte herausschwenkbaren Lappen auszubilden, der zum rückseitigen Verschließen des Kohlehalters mit diesem verrastbar ist. In diesem Fall würde das den Verschlußlappen mit der Trägerplatte bzw. einer Kohlehalterwandung verbindende Filmscharnier nicht zerstört werden.

Um kostengünstig die Trägerplatte mit dem Kohlehalter sowie die zum Verschließen des Kohlehalters verschiebbar angeordnete Rückwand zu spritzen, ohne dass aufwendige Werkzeuge erforderlich sind, ist vorgesehen, dass das Verschlusselement von der Unterseite der Trägerplatte ausgeht, also von der Fläche, die gegenüberliegend zu derjenigen verläuft, auf der der Kohlehalter angeordnet ist. Ferner kann von der kohlehalterseitigen Fläche der Trägerplatte zumindest eine Führung für das Verschlusselement abragen. Insbesondere ist vorgesehen, dass zwei symmetrisch zur Längsachse des Kohlehalters verlaufende Führungen von der Fläche der Trägerplatte abragen, von der der Kohlehalter ausgeht, wobei die Führungen selbst außerhalb der Umfangswandungen des Kohlehalters verlaufen.

Eine besonders einfache Konstruktion ergibt sich dann, wenn jede Führung durch einen U-förmigen von der kohlehalterseitigen Fläche der Trägerplatte ausgehenden Vorsprung gebildet ist, wobei insbesondere der äußere Seitenschenkel des Vorsprungs fluchtend zum äußeren Rand der Trägerplatte verlaufen kann.

Die Höhe der von der Trägerplatte abragenden Vorsprünge sollte so gewählt sein, dass diese oberseitig fluchtend in eine untere Begrenzung eines in einer Seitenwandung des Kohlehalters verlaufenden Längsschlitzes übergehen.

Nach einer Weiterbildung der Erfindung ist vorgesehen, dass das Verschlusselement sowohl einen die Bodenfläche des Kohlehalters bildenden Bereich der Trägerplatte als auch gegenliegende kopfseitige Wandung des Kohlehalters durchsetzt. In diesem Fall sind zusätzliche Führungen in beziehungsweise außerhalb des Kohlehalters nicht erforderlich.

Nach einer alternativen Gestaltung der Erfindung ist das als Schiebeelement ausgebildete Verschlusselement in zumindest einer Führung einer Kohlehalterumfangswandung verschiebbar anordbar.

Bevorzugterweise sind jedoch innenseitig in gegenüberliegenden Umfangswandungen wie Seitenumfangswandungen Führungen für das Verschlusselement vorgesehen, wobei die Führungen durch Aussparungen wie Ausschnitte in den Innenwandungen gebildet werden, so dass der wirksame Querschnitt des Kohlehalters nicht verändert wird. Folglich erfährt die Kohlebürste ungeachtet der vorhandenen Ausschnitte eine hinreichende axiale Führung innerhalb vorgegebenen Spiels.

Die Führung selbst läuft vorzugsweise senkrecht zur Kohlehalterlängsachse, so dass infolge dessen zum Verschließen des Kohlehalters das Verschlusselement senkrecht zur von der Trägerplatte aufgespannten Ebene verschiebbar ist.

In Weiterbildung der Erfindung ist vorgesehen, dass die innenseitig entlang der Seitenwandungen verlaufenden Führungen fluchtend in Durchbrüche kopfseitiger Umfangswandung des Kohlehalters übergehen, so dass mit einfachen Werkzeugen, d. h. Schiebern die Trägerplatte mit dem Kohlehalter bei gleichzeitiger Ausbildung der innerhalb des Kohlehalters verlaufenden Führungen gespritzt werden kann.

Die Durchbrüche sind dabei vorzugsweise Seitenschenkel eines U-förmigen Ausschnitts in der kopfseitigen Umfangswandung, wobei vom Querschenkel des Ausschnitts sich in Richtung der Stirnseite des Kohlehalters ein weiterer Ausschnitt erstreckt, der ein Durchführen eines Werkzeugs wie Dorn zum Zurückhalten einer in den Kohlehalter eingebrachten Kohlebürstenfeder ermöglicht. Hierdurch ergibt sich eine einfache Montage, so dass bei in dem Kohlehalter vorhandener Kohlebürste und Druckfeder das rückseitige Verschließen des Kohlehalters nicht behindert werden kann.

Nach einem weiteren Vorschlag kann in einer Seitenwandung oder der kopfseitigen Wandung ein vom rückseitigen Ende des Kohlehalters ausgehender Längsschlitz verlaufen, der einerseits zur Führung einer Kohlebürstenlitze und andererseits zum Einführen eines Werkzeuges wie Dorn dienen kann, um ebenfalls die Druckfeder beim Verschließen des Kohlehalters aus dem Verschiebeweg des Verschlusselementes zu bringen.

Alternativ oder ergänzend hierzu kann eine Umfangswandung einen vom rückseitigen Ende des Kohlehalters ausgehenden Ausschnitt aufweisen, der sich bis zum stirnseitigen Längsrand der jeweiligen Führung erstreckt, so dass der Ausschnitt ebenfalls bei der Montage von Kohlebürste und Kohlebürstenfeder beim Verschließen des Kohlehalters mit dem Verschlusselement genutzt werden kann, um die Druckfeder in Richtung der Stirnseite des Kohlehalters zu drücken.

Bevorzugterweise weisen zwei aneinandergrenzende Umfangswandungen ineinander übergehende Ausschnitte auf, die in einer Ebene enden, in der die stimseitigen Längsränder der Führungen verlaufen. Dabei weist jeder Ausschnitt in etwa eine Rechteckgeometrie auf.

Das Verschlusselement selbst ist vorzugsweise als U-Profil ausgebildet. Ein T-Profil oder ein I-Profil ist jedoch gleichfalls möglich.

Bei der Verwendung eines U-Profils als Verschlusselement verläuft dessen Querschenkel parallel zur Stirnseite des Kohlehalters. Dabei kann vom oberen Rand des Querschenkels senkrecht zur Kohlehalterlängsachse ein Längsschlitz verlaufen, der beim Verschließen des Kohlehalters von einem Werkzeug wie Dorn zum Zurückhalten der Kohlebürste und Druckfeder durchsetzt ist.

Sofern das Verschlusselement als Verschlusslappen ausgebildet ist, können von diesem Rastnasen ausgehen, die in innen- oder außenseitigen Vertiefungen der Seitenwandungen einrastbar sind. Alternativ können von zumindest zwei Umfangswandungen, vorzugsweise von den Seitenwandungen Rastnasen ausgehen, die bei den Kohlehalter verschließender Position des Verschlusslappens diesen arretieren.

Weitere Einzelheiten und Vorteile der Erfindung ergeben sich nicht nur aus den Ansprüchen, sondern auch aus der nachfolgenden Beschreibung von der Zeichnung zu entnehmendem bevorzugten Ausführungsbeispiel.

Es zeigen:
- Fig. 1: eine erste Ausführungsform eines von einer Trägerplatte ausgehenden Kohlehalters,
- Fig. 2: eine zweite Ausführungsform eines von einer Trägerplatte ausgehenden Kohlehalters,
- Fig. 3: eine zu der Fig. 1 alternative Ausführungsform,
- Fig. 4: eine zu der Fig. 2 alternative Ausführungsform,
- Fig. 5: eine dritte Ausführungsform eines von einer Trägerplatte ausgehenden Kohlehalters,
- Fig. 6: die der Fig. 5 entsprechende Anordnung, jedoch von der Unterseite der Trägerplatte aus betrachtet,
- Fig. 7: die Anordnung nach den Figuren 5 und 6, jedoch mit rückseitig verschlossenem Kohlehalter,
- Fig. 8: eine vierte Ausführungsform eines von einer Trägerplatte ausgehenden Kohlehalters und
- Fig. 9: die Anordnung gemäß Fig. 8, jedoch mit verschlossenem Kohlehalter.

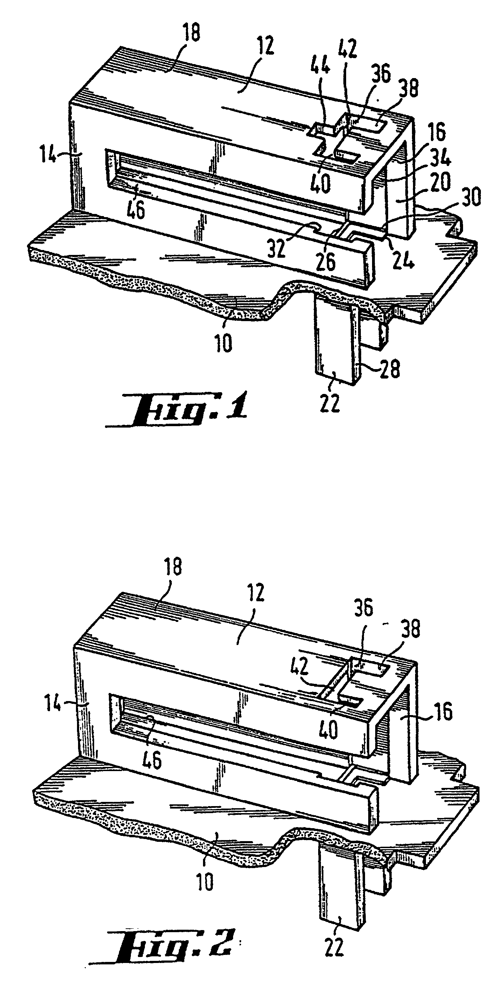

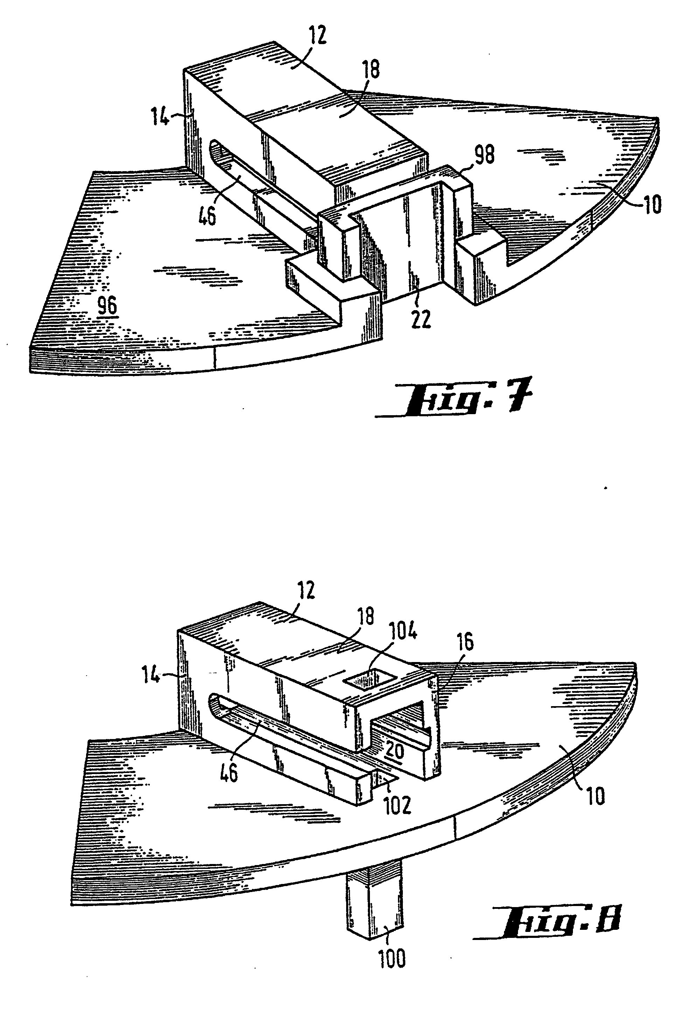

In den Fig. 1 bis 9 sind Ausschnitte einer aus elektrisch isolierendem Material bestehenden Trägerplatte 10 einer Kohlehalteranordnung bestimmt für Elektromotoren dargestellt. Die Trägerplatte 10 ist mit elektrischen Schaltelementen vorzugsweise über ein Stanzgitter verbunden. Insoweit wird auf hinlängliche Konstruktionen verwiesen, wie diese beispielhaft der EP 0 291 765 A2 zu entnehmen sind.

Integral mit der Trägerplatte 10 sind Kohlehalter 12 ausgebildet, d. h. Trägerplatte 10 und Kohlehalter 12, soweit deren Seitenwandungen 14, 16 sowie kopfseitige Wandung 18 betroffen sind, werden als Spritzgussteil hergestellt. Der Kohlehalter 12 wird bodenseitig selbst von einem Abschnitt der Trägerplatte 10 verschlossen. Stirnseitig ist der Kohlehalter 12 offen, wohingegen dessen rückseitiger Bereich 20 erfindungsgemäß mittels eines nachstehend beschriebenen Verschlusselementes verschließbar ist, um eine in der Kohlebürste 12 axial verschiebbare Kohlebürste bzw. eine diese druckbeaufschlagende Feder reproduzierbar abzustützen.

In den Ausführungsbeispielen der Fig. 1 - 7 handelt es sich bei dem Verschlusselement 22 um ein U-Profil, welches zusammen mit der Trägerplatte 10 und dem Kohlehalter 12 gespritzt wird und mit der Trägerplatte 10 über einen Filmanguss verbunden ist, und zwar in einer Aussparung der Trägerplatte 10, durch die das Verschlusselement 22 dann in den Kohlehalter 12 hineinschiebbar ist beziehungsweise diesen rückseitig verschließt, wenn Kohlebürste und Druckfeder innerhalb dieser angeordnet sind.

Hierzu weist die Trägerplatte 10 eine dem Querschnitt des U-förmigen Verschlusselementes 22 entsprechende Aussparung 24 auf. Das Verschlusselement 22 mit seinem Querschenkel 26 verläuft senkrecht zur Längsachse des Kohlehalters 12, wohingegen dessen Seitenschenkel 28, 30 teilweise in Führungen 32, 34 der Seitenwandungen 14, 16 des Kohlehalters 12 (Fig. 1 - 4) oder in von der Trägerplatte ausgehenden U-förmigen Abschnitten 66, 68 (Fig. 5 - 7) geführt aufgenommen sind.

Die Führungen 32, 34 gemäß Fig. 1 - 4 bilden Aussparungen in den Innenwandflächen der Seitenwandungen 14, 16, so dass eine Innenquerschnittsveränderung durch die Führungen 32, 34 unterbleibt.

Um beim Spritzen die Führungen 32, 34 ausbilden zu können, ist in der kopfseitigen Wandung 18 des Kohlehalters 12 eine U-förmige Aussparung 36 vorgesehen, deren Seitenschenkel 38, 40 außenrandseitig mit den Längswandungen der Führungen 32, 34 fluchten.

Vom Querschenkel 42 der U-förmigen Aussparung 36 geht eine weitere rechteckförmige Aussparung 44 aus, die sich in Richtung der Stirnseite des Kohlehalters 44 erstreckt. Hierdurch wird die Möglichkeit eröffnet, dass bei in dem Kohlehalter 12 eingebrachter Kohlebürste und auf dieser einwirkender Druckfeder letztere in Richtung der Öffnung des Kohlehalters 12 gedrückt werden kann, um das Verschlusselement 22 in den Kohlehalter 12 hineinschieben zu können, um diesen also rückseitig zu verschließen. Dabei wird der Filmanguss, der die Verbindung zwischen dem Verschlusselement 22 und der Trägerplatte 10 herstellt, zerstört.

In der Seitenwandung 14 verläuft ein Längsschlitz 46, der von der Rückseite des Kohlehalters 12 ausgeht. Der Längsschlitz 46 kann dabei nicht nur zur Führung einer Kohlebürstenlitze dienen, sondern auch zum Einbringen eines Werkzeuges wie Dorns, um zum Hineinschieben des Verschlusselementes 22 in den Kohlehalter 12 die Druckfeder zurückzuhalten.

Sofern diese Möglichkeit genutzt wird, erübrigt sich der sich in Richtung der Stirnseite des Kohlehalters 12 erstreckende im Schnitt rechteckförmige Ausschnitt 44 in der kopfseitigen Wandung 18, wie dies an Hand der Fig. 2 verdeutlicht wird.

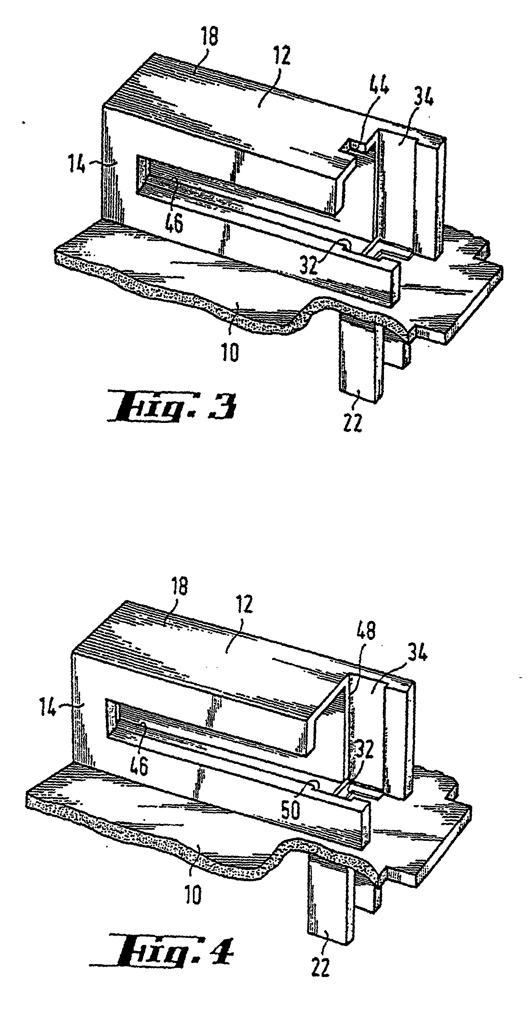

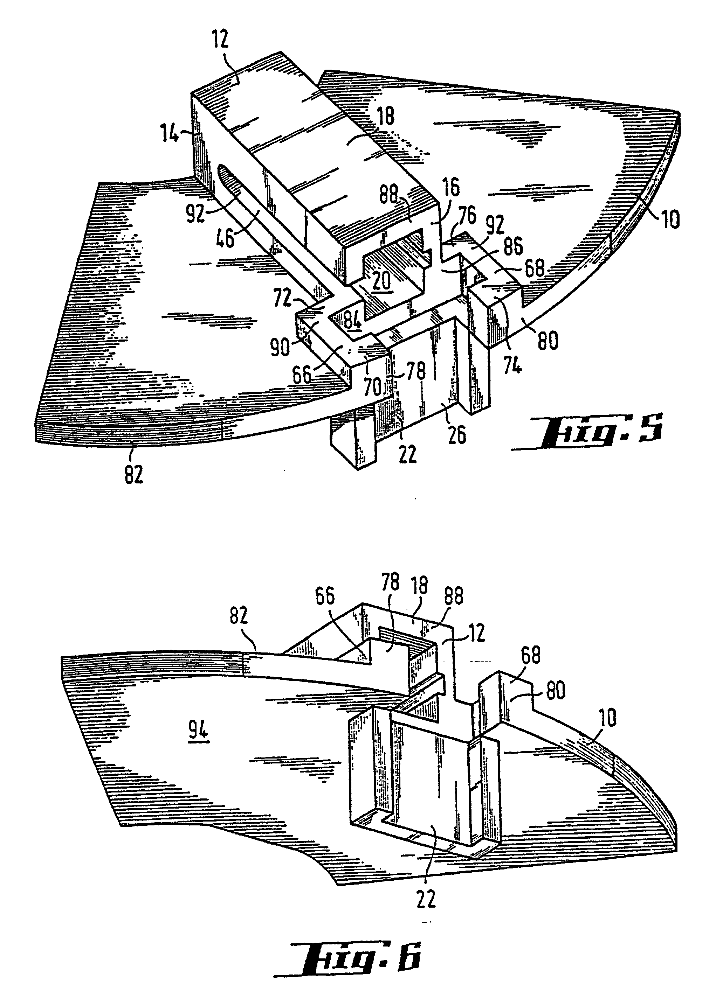

Die Ausführungsformen der Fig. 3 und 4 unterscheiden sich von denen der Fig. 1 und 2 dahingehend, dass sowohl von der Seitenwandung 14 als auch von der kopfseitigen Wandung 18 rechteckige Ausschnitte 44 von der Rückseite des Kohlehalters 12 ausgehen, wobei diese in einer Ebene enden, die senkrecht zur Längsrichtung des Kohlehalters 12 verläuft und in der die stirnseitigen Längsränder 48, 50 der Führungen 32, 34 liegen. Hierdurch ergibt sich auf einfache Weise die Möglichkeit, eine in den Kohlehalter 12 eingebrachte Druckfeder aus dem Verschiebeweg der Verschlusselemente 22 in Richtung der Stirnseite des Kohlehalters 12 zu drücken. Ergänzend kann die kopfseitige Wandung 18 des Kohlehalters 12 einen im Schnitt rechteckigen Ausschnitt 44 entsprechend der Fig. 1 aufweisen.

Das Ausführungsbeispiel der Fig. 5 - 7 unterscheidet sich von denen der Fig. 1 - 4 dahingehend, dass das Verschluss- oder Schiebeelement 22 nicht in innerhalb des Kohlehalters 12 verlaufenden Führungen, sondern innerhalb von den durch die Abschnitte 66, 68 gebildeten Führungen verschiebbar ist, die sich rückseitig entlang des Kohlehalters 12 erstrecken, um den Kohlehalter rückseitig mittels des Querschenkels 26 des Verschlusselementes 22 verschließen zu können. Dabei verläuft der jeweilige U-förmige Vorsprung 66, 68 mit seinen Seitenschenkeln 70, 72 beziehungsweise 74, 76 derart, dass die äußeren Seitenschenkel 70, 74 mit ihren Außenflächen 78, 80 fluchtend in den äußeren Rand 82 der Trägerplatte 10 übergehen und die inneren kohlehalterseitigen Schenkel 72, 76 mit ihren Innenflächen 84, 86 fluchtend zu der rückseitigen Stirnfläche 88 des Kohlehalters 12 verlaufen. Ferner gehen die oberen Ränder 90, 92 der die Führungen bildenden im Schnitt U-förmigen Abschnitte 66, 68 bündig in die untere, das heißt trägerseitige Begrenzungsfläche 92 des beziehungsweise der Längsschlitze 46 über.

Das Verschlusselement 22 wird zum Verschließen des Kohlehalters 12 von der Unterseite 94 der Trägerplatte 10 in Richtung der Oberseite 96 der Trägerplatte 10 verschoben, um nach Durchbrechen eines Gussscharniers oder einer entsprechenden Verbindung zwischen dem Verschlusselement 22 und der Trägerplatte 10 den Kohlehalter 12 rückseitig zu verschließen, wie dies aus der Fig. 7 ersichtlich ist.

Der Filmanguss kann dabei zwischen dem oberen umlaufenden Rand 98 des Verschlusselementes 22 und entsprechender Aussparungen entlang der Unterseite 94 der Trägerplatte 10 verlaufen.

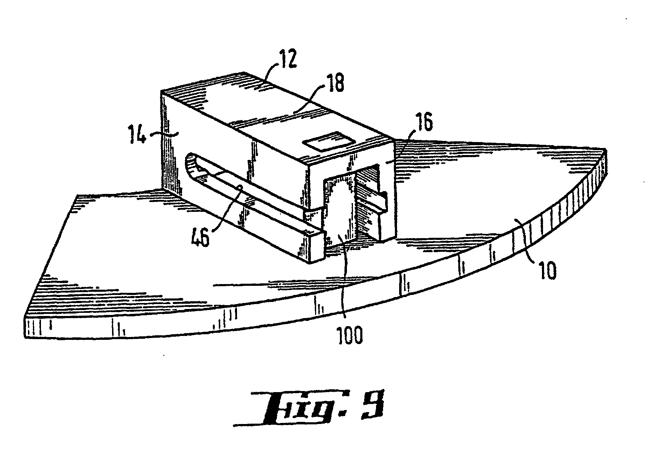

Das Ausführungsbeispiel der Fig. 8 und 9 unterscheidet sich von den zuvor beschriebenen dahingehend, dass als Verschlusselement ein quaderförmiges Stabelement 100 benutzt wird, welches sowohl die Trägerplatte 10 als auch die kopfseitige Wandung 18 des Kohlehalters 14 durchsetzt, um einerseits hinreichend geführt und andererseits eine stabile Abstützung für eines innerhalb des Kohlehalters 12 angeordneten Federelementes zu bilden. Die dem Querschnitt des Verschlusselementes 100 angepassten Aussparungen sind mit den Bezugszeichen 102 und 104 versehen.

Auch ist der Kohlehalter 12 nicht durch ein senkrecht zur Längsachse des Kohlehalters 12 bzw. zu der von der Trägerplatte 10 aufgespannten Ebene verschiebbares Verschlusselement 22, sondern durch einen aus der Trägerplatte 10 herausklappbaren Verschlusslappen verschließbar, der über ein Filmscharnier in die Trägerplatte 10 übergeht. Somit besteht die Möglichkeit, die Trägerplatte 10 mit dem Kohlehalter 12 sowie dem Verschlusslappen als ein Spritzteil herzustellen, um sodann bei in den Kohlehalter 12 eingebrachter Kohlebürste mit Druckfeder den Kohlehalter 12 rückseitig durch Verschwenken des Verschlusslappens zu verschließen.

Damit der Verschlusslappen sicher den Kohlehalter 12 rückseitig verschließt, gehen von der dem Kohlehalter 12 zugewandten Fläche des Lappens Rasthaken aus, die in Aussparungen der Seitenwandungen 14, 16 des Kohlehalters 12 einrasten können.

Alternativ besteht die Möglichkeit, dass von den Außenflächen der Seitenwandungen 14, 16 und/oder der kopfseitigen Wandung 18 Rasthaken ausgehen, die bei den Kohlehalter 12 verschließender Position den Verschlusslappen 12 arretieren.

Durch die erfindungsgemäße Lehre ergibt sich der Vorteil, dass ein vollständig aus Kunststoffmaterial bestehender Kohlehalter 12 zur Verfügung gestellt wird, wobei die Umfangsund Rückwand integral mit der Trägerplatte 10 gespritzt werden, ohne dass die Kohlebürste mit Feder von der Stirnseite des Kohlehalters her montiert werden muss. Da die entweder von dem Schiebeelement 22 oder dem Verschlusslappen gebildete Rückwandung eine eindeutige Position zum Kohlehalter 12 einnimmt und entweder durch die Führungen 32, 34 oder durch die Verrastung mit den Umfangswandungen des Kohlehalters 12 eine quasi starre Einheit bildet, ist ein reproduzierbares Abstützen der Druckfeder, die auf die Kohlebürste einwirkt, gegeben.

Ferner besteht die Möglichkeit, den Kohlehalter 12 in bezug auf die Trägerplatte 10 relativ lang auszubilden, da im Vergleich zu dem Stand der Technik, nach dem ein Kohlehalter rückseitig durch einen Lappen eines Stanzgitters verschlossen ist, Abschnitte der Trägerplatte eine Behinderung zum Verschließen des Kohlehalters 12 nicht darstellen können.

Sofern die Verschlusselemente 22 als U-Profile ausgebildet sind, kann in dem Querschenkel 26 ein Längsschlitz vorhanden sein, der vom oberen Rand des Verschlusselementes 22 ausgeht. Oberer Rand bedeutet dabei derjenige, der bei mit der Trägerplatte 10 verbundenem Verschlusselement 22 in dessen Ebene verläuft. Durch den Längsschlitz ist der Vorteil gegeben, dass vor Verschließen des Kohlehalters 12 in diesen eingebrachte Kohlebürste mit der Druckfeder in Richtung der Stirnseite des Kohlehalters 12 aus dem Verschiebeweg des Verschlusselementes 22 gedrückt werden kann, ohne dass das Verschlusselement 22 eine Behinderung darstellt.

## Patentansprüche

1. Kohlehalteranordnung für Elektromotoren umfassend eine aus elektrisch isolierendem Material bestehende Trägerplatte (10) mit von dieser ausgehendem köcherförmigen stirnseitig offenen Kohlehalter (12), dessen Umfangswandungen (14, 16, 18) sowie Rückwandung aus dem Trägermaterial ausgebildet sind, wobei zum rückseitigen Verschließen des Kohlehalters (12) die Rückwandung durch ein relativ zu den Umfangswandungen (14, 16, 18) des Kohlehalters bewegbares Verschlusselement (22) oder einen Abschnitt von diesem gebildet ist,
**dadurch gekennzeichnet,**
**dass** das Verschlusselement (22) zusammen mit der Trägerplatte (10) oder einer Umfangswandung des Kohlehalters (12) als ein Spritzteil hergestellt ist.

2. Kohlehalteranordnung nach Anspruch 1,
**dadurch gekennzeichnet,**
**dass** das vorzugsweise als U-Profil, T-Profil oder I-Profil ausgebildete Verschlusselement (22) vor dessen Relativbewegung zu dem Kohlehalter (12) integral mit der Tragplatte (10) und/oder einer Kohlehalterumfangswandung verbunden ist.

3. Kohlehalteranordnung nach Anspruch 1 oder 2,
**dadurch gekennzeichnet,**
**dass** das Verschlusselement (22) über einen Filmanguss oder ein Filmscharnier mit der Trägerplatte (10) beziehungsweise der Umfangswandung des Kohlehalters (12) verbunden ist.

4. Kohlehalteranordnung nach zumindest einem der vorhergehenden Ansprüche,
**dadurch gekennzeichnet,**
**dass** das Verschlusselement (22) ein Schiebeelement ist, das in zumindest einer Führung (32, 34) in der Trägerplatte vor und/oder in einer Kohlehalterumfangswandung (14, 16) vorzugsweise senkrecht zur von der Trägerplatte (10) aufgespannten Ebene verschiebbar anordbar ist.

5. Kohlehalteranordnung nach zumindest einem der vorhergehenden Ansprüche,
**dadurch gekennzeichnet,**
**dass** das Verschlusselement (22) von der Trägerplatte von ihrer zum Kohlehalter (12) fernliegenden Fläche (94) ausgeht.

6. Kohlehalteranordnung nach zumindest einem der vorhergehenden Ansprüche,
**dadurch gekennzeichnet,**
**dass** von der kohlehalterseitigen Fläche (96) der Trägerplatte (10) Führungen (66, 68) für das Verschlusselement (22) abragen, dass insbesondere die Führungen symmetrisch zur Längsachse des Kohlehalters (12), vorzugsweise außerhalb der Umfangswandungen (14, 16, 18) des Kohlehalters verlaufen und dass jede Führung vorzugweise durch einen U-förmigen von der kohlehalterseitigen Fläche der Trägerplatte ausgehenden Vorsprung gebildet ist, wobei ein Seitenschenkel (70, 74) des U-förmigen Vorsprungs (66, 68) außenseitig fluchtend zum äußeren Rand (82) der Trägerplatte (10) verläuft und/oder der vorzugsweise U-förmige Vorsprung (66, 68) oberseitig fluchtend in eine trägerseitige Begrenzung (92) eines in einer Seitenwand (14, 16) des Kohlehalters verlaufenden Längsschlitzes (46) übergeht.

7. Kohlehalteranordnung nach zumindest einem der vorhergehenden Ansprüche,
**dadurch gekennzeichnet,**
**dass** ein Seitenschenkel (72, 76) des im Schnitt U-förmigen Vorsprungs (66, 68) innenseitig fluchtend in rückseitiger Stirnfläche (88) des Kohlehalters (12) übergeht, dass insbesondere innenseitig in gegenüberliegenden Umfangswandungen (14, 16) wie Seitenumfangswandungen Führungen (32, 34) für das Verschlusselement (22) vorgesehen sind und vorzugsweise die bevorzugterweise senkrecht zur Kohlehalterlängsachse verlaufende Führung (32, 34) durch eine Aussparung wie Ausschnitt in einer Innenwandung ausgebildet ist.

8. Kohlehalteranordnung nach zumindest einem der vorhergehenden Ansprüche,
**dadurch gekennzeichnet,**
**dass** die innenseitig entlang der Seitenwandungen (14, 16) verlaufenden Führungen (32, 34) fluchtend in Durchbrüche (36, 38, 40) kopfseitiger Umfangswandung (18) des Kohlehalters (12) übergehen, wobei die Durchbrüche (38, 40) insbesondere Seitenschenkel eines U-förmigen Ausschnitts (36) in der kopfseitigen Umfangswandung (18) sind.

9. Kohlehalteranordnung nach zumindest einem der vorhergehenden Ansprüche,
**dadurch gekennzeichnet,**
**dass** sich vom Querschenkel (42) des Ausschnitts (36) ausgehend ein in Richtung der Stirnseite des Kohlehalters (12) verlaufender weiterer Ausschnitt zum Durchführen eines Werkzeugs wie Dorn zum Zurückhalten einer in den Kohlehalter eingebrachten Kohlebürstenfeder erstreckt und/oder dass in einer Seitenwandung (14) ein vom rückseitigen Ende des Kohlehalters (12) ausgehender Längsschlitz (46) verläuft.

10. Kohlehalteranordnung nach zumindest einem der vorhergehenden Ansprüche,
**dadurch gekennzeichnet,**
**dass** zumindest eine Umfangswandung (16, 18) einen vom rückseitigen Ende des Kohlehalters (12) ausgehenden Ausschnitt aufweist, der sich bis zum stirnseitigen Längsrand (48, 50) der Führung (32, 34) erstreckt.

11. Kohlehalteranordnung nach zumindest einem der vorhergehenden Ansprüche,
**dadurch gekennzeichnet,**
**dass** in zwei aneinandergrenzenden Umfangswandungen (14, 18) ineinanderübergehende Ausschnitte verlaufen, die in einer Ebene enden, in der die stirnseitigen Längsränder (48, 50) der Führungen (32, 34) verlaufen.

12. Kohlehalteranordnung nach zumindest einem der vorhergehenden Ansprüche,
**dadurch gekennzeichnet,**
**dass** das Verschlusselement als insbesondere aus der Ebene der Trägerplatte (10) herausschwenkbarer Lappen ausgebildet ist, der zum rückseitigen Verschließen des Kohlehalters (12) mit diesem verrastbar ist, wobei insbesondere der verschwenkbare Lappen mit der Trägerplatte (10) über ein Filmscharnier verbunden ist und vorzugsweise von dem Verschlusslappen Rastnasen ausgehen, die in innen- oder außenseitigen Vertiefungen von Umfangswandungen (14, 16, 18) des Kohlehalters (12) einrastbar sind.

13. Kohlehalteranordnung nach zumindest einem der vorhergehenden Ansprüche,
**dadurch gekennzeichnet,**
**dass** von vorzugsweise zwei Umfangswandungen (14, 16, 18) des Kohlehalters (12) Rastnasen ausgehen, die bei den Kohlehalter verschließender Position des Verschlusslappens diesen arretieren.

## Claims

1. A carbon holder array for electric motors comprising a carrier plate (10) consisting of an electrically insulating material with quiver-like carbon holder (12) extending from said carrier plate and open at the end, whose circumferential walls (14, 16, 18) and rear wall are formed from the carrier material, where the rear wall is formed by a closing element (22) movable relative to the circumferential walls (14, 16, 18) of the carbon holder or by a section of said closing element in order to close the carbon holder (12) at the rear,
**wherein**
the closing element (22) together with the carrier plate (10) or a circumferential wall of the carbon holder (12) is manufactured as an injection-moulded part.

2. Carbon holder array according to Claim 1,
**wherein**
the closing element (22) preferably designed as a U-section, T-section or I-section is integrally connected to the carrier plate (10) and/or to a carbon holder circumferential wall before the movement of said closing element relative to the carbon holder (12).

3. Carbon holder array according to Claim 1 or Claim 2,
**wherein**
the closing element (22) is connected by means of a film gate or film hinge to the carrier plate (10) or to the circumferential wall of the carbon holder (12).

4. Carbon holder array according to at least one of the previous claims,
**wherein**
the closing element (22) is a sliding element that can be disposed movably in at least one guideway (32, 34) in the carrier plate in front of and/or inside a carbon holder circumferential wall (14, 16) preferably perpendicular to the plane formed by the carrier plate (10).

5. Carbon holder array according to at least one of the previous claims,
**wherein**
the closing element (22) extends from the carrier plate from the surface (94) of the latter at a distance from the carbon holder (12).

6. Carbon holder array according to at least one of the previous claims,
**wherein**
the guideways (66, 68) for the closing element (22) protrude from the carbon holder-side surface (96) of the carrier plate (10), wherein in particular the guideways run symmetrically to the longitudinal axis of the carbon holder (12), preferably outside the circumferential walls (14, 16, 18) of the carbon holder, and wherein each guideway is preferably formed by a U-shaped projection extending from the carbon holder-side surface of the carrier plate, where side pieces (70, 74) of the U-shaped projections (66, 68) are flush on the outside with the outer edge (82) of the carrier plate (10) and/or the preferably U-shaped projections (66, 68) merge flush at the top with a carrier-side limitation (92) of a longitudinal slot (46) provided in side walls (14, 16) of the carbon holder.

7. Carbon holder array according to at least one of the previous claims,
**wherein**
side pieces (72, 76) of the projections (66, 68) of U-shaped section merge flush on the inside with the rear end face (88) of the carbon holder (12), wherein guideways (32, 34) for the closing element (22) are provided in particular on the inside in opposite circumferential walls (14, 16) such as lateral circumferential walls and the guideways (32, 34) running preferably perpendicular to the carbon holder longitudinal axis are preferably formed by a recess such as a cutout in an inner wall.

8. Carbon holder array according to at least one of the previous claims,
**wherein**
the guideways (32, 34) running on the inside along the side walls (14, 16) merge flush into breakthroughs (36, 38, 40) in the top circumferential wall (18) of the carbon holder (12), where the breakthroughs (38, 40) are in particular sides of a U-shaped cutout (36) in the top circumferential wall (18).

9. Carbon holder array according to at least one of the previous claims,
**wherein**
extending from the transverse section (42) of the cutout (36) is a further cutout running in the direction of the end face of the carbon holder, for passing through a tool such as a mandrel to retain a carbon brush spring inserted into the carbon holder, and/or wherein a longitudinal slot (46) runs in a side wall (14) and extends from the rear end of the carbon holder (12).

10. Carbon holder array according to at least one of the previous claims,
**wherein**
at least one circumferential wall (16, 18) has a cutout extending from the rear end of the carbon holder (12) and as far as the front longitudinal edges (48, 50) of the guideways (32, 34).

11. Carbon holder array according to at least one of the previous claims,
**wherein**
cutouts merging into one another run in two adjacent circumferential walls (14, 18) and end in a plane in which run the front longitudinal edges (48, 50) of the guideways (32, 34).

12. Carbon holder array according to at least one of the previous claims,
**wherein**
the closing element is formed as a tab swivellable in particular out of the plane of the carrier plate (10) and engageable with the carbon holder (12) for closing the latter at the rear, where in particular the swivellable tab is connected to the carrier plate (10) by a film hinge and engaging noses preferably extend from the closing tab that are engageable in inner or outer recesses in circumferential walls (14, 16, 18) of the carbon holder (12).

13. Carbon holder array according to at least one of the previous claims,
**wherein**
engaging noses extend from preferably two circumferential walls (14, 16, 18) of the carbon holder (12) and lock the closing tab in its position which closes the carbon holder.

## Revendications

1. Arrangement de porte-balai pour balai en charbon de moteurs électriques, comprenant une plaque porteuse (10) en matériau électriquement isolant dont est issu un porte-balai (12) tubulaire ouvert en avant (12) et dont les parois périphériques (14, 16, 18) ainsi que la paroi arrière sont constituées par le matériau du support, la paroi arrière, ser-vant à fermer le porte-balai (12) étant constituée par un élément de fermeture (22) mobile par rapport aux parois périphériques (14, 16, 18), ou par une partie de cet élément,
**caractérisé en ce que**
l'élément de fermeture (22) est une pièce réalisée par injection, avec la plaque porteuse (10) ou une paroi périphérique du porte-balai (12).

2. Arrangement de porte-balai selon la revendication 1,
**caractérisé en ce que**
l'élément de fermeture (22), constitué de préférence par un profilé en U, en T ou en I est, avant son déplacement par rapport au porte-balai (12) intégralement relié à la plaque porteuse (10) et/ou à une paroi périphérique du porte-balai.

3. Arrangement de porte-balai selon la revendication 1 ou 2,
**caractérisé en ce que**
l'élément de fermeture (22) est relié par un culot pelliculaire ou une charnière pelliculaire à la plaque porteuse (10) ou à la paroi périphérique du porte-balai (12).

4. Arrangement de porte-balai selon l'une quelconque des revendications précédentes,
**caractérisé en ce que**
l'élément de fermeture (22) est un élément coulissant, monté dans au moins un guidage (32, 34) prévu dans la plaque porteuse devant et/ou dans une paroi périphérique (14, 16) de porte-balai, de préférence perpendiculairement au plan défini par la plaque porteuse (10).

5. Arrangement de porte-balai selon l'une quelconque des revendications précédentes,
**caractérisé en ce que**
l'élément de fermeture (22) part de la face (94) de la plaque porteuse éloignée du porte-balai (12).

6. Arrangement de porte-balai selon l'une quelconque des revendications précédentes,
**caractérisé en ce que**
sur la face (96) de la plaque porteuse (10) située vers le porte-balai s'élèvent des guidages (66, 68) pour l'élément de fermeture (22), symétriques par rapport à l'axe longitudinal du porte-balai (12) et situés de préférence en dehors des parois longitudinales (14, 16, 18) du porte-balai, chaque guidage est de préférence constitué par une partie en saillie en forme de U, portant la face de la plaque porteuse située vers le porte-balai, et la saillie (66, 68) en forme de U est alignée extérieurement par une branche latérale (70, 74) sur le bord extérieur (82) de la plaque porteuse (10), et sa face supérieure se poursuit avec alignement dans une délimitation (92) du côté de la plaque porteuse une fente longitudinale (46) ouverte dans une paroi latérale (14, 16) du porte-balai.

7. Arrangement de porte-balai selon l'une quelconque des revendications précédentes,
**caractérisé en ce qu'**
une branche latérale (72, 76) de la saillie (66, 68) à section en forme de U se prolonge vers l'intérieur avec alignement par la face frontale arrière (88) du porte-balai (12), et il est prévu notamment vers l'intérieur dans des parois périphériques opposées (14, 16) jouant le rôle de parois latérales, des guidages (32, 34) pour l'élément de fermeture, et ces guidages (32, 34), qui sont de préférence perpendiculaires à l'axe longitudinal du porte-balai, étant de préférence constitués par un évidement ou une découpe dans la paroi interne.

8. Arrangement de porte-balai selon l'une quelconque des revendications précédentes,
**caractérisé en ce que**
les guidages (32, 34) disposés intérieurement le long des parois latérales (14, 16) se prolongent avec alignement par des passages (36, 38, 40) à travers la paroi de tête (18) du porte-balai (12), les passages (38, 40) étant en particulier les ailes latérales d'une découpe (36) en formc de U pratiquée dans la paroi de tète (18).

9. Arrangement de porte-balai selon l'une quelconque des revendications précédentes,
**caractérisé en ce que**
de la branche latérale (42) de la découpe (36) part en direction de la face avant du porte-balai (12) une autre découpe permettant le passage d'un outil tel qu'une broche pour maintenir en arrière un ressort du balai en charbon introduit dans le porte-balai, et/ou dans une paroi latérale (14) est découpée une fente longitudinale (46) partant de l'extrémité arrière du porte-balai (12).

10. Arrangement de porte-balai selon l'une quelconque des revendications précédentes,
**caractérisé en ce qu'**
au moins une paroi périphérique (16, 18) présente une découpe partant de l'extrémité arrière du porte-balai (12) et allant jusqu'au bord longitudinal (48, 50) avant du guidage (32, 34).

11. Arrangement de porte-balai selon l'une quelconque des revendications précédentes,
**caractérisé en ce que**
dans deux parois périphériques (14, 18) se bordant l'une l'autre, se font suite des découpes se terminant dans un plan contenant les bords longitudinaux avant (48, 50) des guidages (32, 34).

12. Arrangement de porte-balai selon l'une quelconque des revendications précédentes,
**caractérisé en ce que**
- l'élément de fermeture est constitué notamment par une languette basculante pouvant venir en blocage avec le porte-balai (12) pour obturer celui-ci vers l'arrière, et
- la languette basculante est notamment reliée à la plaque porteuse (10) par une charnière pelliculaire et de cette languette partent des dents d'arrêt qui peuvent venir se bloquer dans des creux internes ou externes des parois périphériques (14, 16, 18) du porte-balai (12).

13. Arrangement de porte-balai selon l'une quelconque des revendications précédentes,
**caractérisé en ce que**
des dents d'arrêt partent de deux parois périphériques (14, 16, 18) du porte-balai (12) et viennent bloquer la languette de fermeture quand celle-ci obture le porte-balai.
